# EUROPEAN PATENT SPECIFICATION

(11) **EP 0 957 476 B1**
(45) Date of publication and mention of the grant of the patent: **11.05.2005**
(21) Application number: 99108492.2
(22) Date of filing: 12.05.1999
(51) Int. Cl.: G11B 7/24

(54) **Phase-change type optical recording medium**
Optisches Aufzeichnungsmedium vom Phasenwechsel-Typ
Support d'enregistrement optique de type à changement de phase

(30) Priority: 13.05.1998 JP 13002898; 31.07.1998 JP 21706998
(43) Date of publication of application: 17.11.1999
(73) Proprietor: Ricoh Company, Ltd., Tokyo 143-8555 (JP)
(72) Inventor: Kinoshita, Mikio, c/o Ricoh Company, Ltd., Tokyo 143-8555 (JP); Harigaya, Makoto, c/o Ricoh Company, Ltd., Tokyo 143-8555 (JP)
(74) Representative: Barz, Peter, Dr.

(56) References cited:
- EP-A- 0 373 955
- EP-A- 0 717 404
- EP-A- 0 793 223
- DE-A- 3 832 126

## Description

The present invention relates to a phase-change type optical recording medium comprising a recording material of which optical characteristics are changeable with light beam irradiation therewith from a crystalline state to an amorphous state and vice versa, and which is capable of recording information, and reproducing and rewriting recorded information by utilizing the changes in the optical characteristics thereof.

So-called phase-change type recording media are well known, which comprise a recording material capable of recording information and reproducing and erasing recorded information, utilizing the phase changes of the recording material between a crystalline state and a non-crystalline state, or the phase changes thereof between different crystalline states with laser beam irradiation thereto.

With respect to the above phase-change type optical recording media, overwriting can be performed, using a single beam, so that an optical system for driving the media is very simple in mechanism and therefore the phase-change type recording media are used as recording media for computers, appliances related thereto, and image and acoustic appliances.

Specific examples of recording materials for use in the phase-change type recording media are GeTe, GeTeSe, GeTeS, GeSeS, GeSeSb, GeAsSe, InTe, SeTe, SeAs, Ge - Te - (Sn, Au, Pd), GeTeSeSb, GeTeSb, and Ag - In - Sb - Te.

In particular, Ag - In - Sb - Te recording materials have a feature that the sensitivity thereof is so high that the contours of amorphous portions are clear. Therefore, the Ag - In - Sb - Te recording materials have been developed for use in a recording layer for mark edge recording as disclosed in Japanese Laid-Open Patent Application 3-231889, Japanese Laid-Open Patent Application 4-191089, Japanese Laid-Open Patent Application 4-232779, Japanese Laid-Open Patent Application 4-267192, Japanese Laid-Open Patent Application 5-345478 and Japanese Laid-Open Patent Application 6-166266.

In Japanese Laid-Open Patent Application 3-231889, there is disclosed a recording layer comprising a recording material with a general formula of I·(III_{1-γ}V_{γ})·VI₂ in which I represents an element in group I; III, an element in group III; V, an element in group V; and VI, an element in group VI. The recording layer disclosed in this Japanese Laid-Open Patent Application has a problem in the recording characteristics thereof when used repeatedly (hereinafter referred to as repeated use characteristics).

In Japanese Laid-Open Patent Application 4-191089, there is disclosed an information recording medium comprising a recording layer with improved erasing ratio and high speed recording, but there is still a problem to be solved in the repeated use recording characteristics thereof for use in practice.

In Japanese Laid-Open Patent Application 4-232779, there is disclosed an information recording medium comprising a recording layer with an unrecorded portion thereof (crystallized portion) having such a structure that contains a mixed phase composed of a stable phase (AgSbTe₂) and an amorphous phase situated around the stable phase. Due to this structure, the repeated use recording characteristics are improved. However, noise is caused by the presence of fine crystalline grain boundaries in the structure. The thus caused noise does not have serious adverse effects on the recording characteristics of an optical recording medium having a relatively low recording density, such as CD-RW (Compact Disk-Rewritable), which uses a laser beam with a recording and reproduction wavelength of about 780 nm, but has adverse effects on the achievement of high density recording as in DVD (Digital Versatile Disk)-RAM with the recordign density thereof being about 4 times that of CD - RW, which uses a laser beam with a wavelength of 680 nm or less, and also on the achievement of high density recording as in DVD - RW with higher recording density. With respect to the repeated use recording characteristics thereof, there are still some problems to be solved.

In Japanese Laid-Open Patent Application 4-267192, there is disclosed an information recording medium comprising a recording layer with a crystallized portion having such a structure that is composed of an AgSbTe₂ phase separated from a uniform amorphous phase, and other phase (a stable crystalline phase or the amorphous phase) in a mixed phase state. When the other phase is the amorphous phase, the disclosed information recording medium has the same problems as in the information recording medium disclosed in the above-mentioned Japanese Laid-Open Patent Application 4-232779, while when the other phase is a stable crystalline phase, there is a problem that good recording characteristics cannot be obtained as will be explained in detail.

Information recording media disclosed in Japanese Laid-Open Patent Applications 5-345478 and 6-166268 have the same problems to be solved as mentioned above.

In optical recording media with a recording layer which comprises an Ag-In-Sb-Te recording material or an recording material comprising elements of Ib group, IIIb group, Vb group and VIb group, there has not conventionally been reported an optical recording medium with a recording layer comprising a recording material which comprises elements of Ib group, IIIb group, Vb group and VIb group, and at least one meta-stable crystalline phase belonging to Fm3m space group. Accordingly, there has not been reported any prior art which clarifies whether or not the meta-stable crystalline phase can exist, and whether or not the recording material comprising the above elements and one meta-stable crystalline phase or a plurality of meta-stable crystalline phases belonging to Fm3m space group, if any, with a particular composition, is resistant to thermal shocks during repeated recording steps. As a matter of course, there has not been reported any prior art which clarifies the relationship between the composition of the recording layer and the repeated use recording characteristics thereof, or the relationship between the composition of the recording layer and the crystalline structure thereof, or the relationship between the crystalline structure and the repeated use recording characteristics thereof, or the relationship between the composition region and the recording line speed for attaining excellent repeated use recording characteristics.

Furthermore, no information has been provided as to the composition of the recording layer for controlling the crystallization rate of the recording material while excellent repeated use recording characteristics are maintained.

Furthermore, currently there is no optical recording medium having as high recording density and as good recording characteristics as those of DVD-ROM.

Furthermore, there is no phase-change type optical disk, with excellent repeated use recording characteristics and with high recording density over an entire range in which the recording line speed varies from place to place as in CAV (Constant Anguler Velocity) recording.

Tt is therefore an object of the present invention to provide a phase-change type optical recording medium with random access capability, in which recording line speed varies depending upon the recording location thereof, capable of attaining high recording density and excellent repeated use recording characteristics over a wide range of the recording line speed, as in a phase-change type optical disk which performs recording and reproduction with a CAV system or an MCAV system.

The above object of the present invention can be achieved by a phase-change type optical recording medium provided with a recording layer which comprises a meta-stable phase recording material belonging to Fm3m space group with a composition of (Ib)ₐ(IIIb)_{b}(Sb)ₓ(Te)_{1-a-b-x}, in which 0.72 ≦ x + 2a + 7b/6 ≦ 0.82. The recording layer is capable of changing from a crystalline state to an amorphous state and vice versa and the optical characteristics thereof are changed in accordance with the above changes.

In the optical recording medium of the present invention, the meta-stable phase belonging to Fm3m space group is considered to be formed substantially by Sb and Te in the recording material.

In the above optical recording medium, the recording material may further comprise at least one element selected from the group consisting of elements which belong to Ib group, IIb group, IIIb group, IVa group, IVb group, Va group, VIa group, elements in Vb group other than Sb, elements in VIb group other than Te, and rare earth elements.

It is preferable that in the above optical recording medium of the present invention, the recording material have a composition of (Ib)ₐ(IIIb)_{b}(Sb)ₓ(Te)_{1-a-b-x} in which 0.75 ≦ x + 2a + 7b / 6 ≦ 0.76, for the improvement of the repeated use recording characteristics of the optical recording medium.

In the optical recording medium of the present invention, the element for Ib group in the composition of (Ib)ₐ(IIIb)_{b}(Sb)ₓ(Te)_{1-a-b-x} of the recording material may be an element selected from the group consisting of Ag and Au.

The above optical recording medium may be a disc-shaped recording medium, and in this case, it is preferable that the content ratio of the element in Ib group in the composition of the recording material be decreased in the radius direction from an inner side toward a peripheral side of the disc-shaped recording medium.

For the disc-shaped recording medium, it is preferable that a in the composition of (Ib)ₐ(IIIb)_{b}(Sb)ₓ(Te)_{1-a-b-x} of the recording material in the radius direction be in a range of 0.05 to 0.09 (0.05 ≦ a ≦ 0.09) for a recording line speed of 1 to 2 m/sec.

For the disc-shaped recording medium, it is preferable that a in the composition of (Ib)ₐ(IIIb)_{b}(Sb)ₓ(Te)_{1-a-b-x} of the recording material in the radius direction be in a range of 0.03 to 0.07 (0.03 ≦ a ≦ 0.07) for a recording line speed of 2 to 3 m/sec.

For the disc-shaped recording medium, it is preferable that a in the composition of (Ib)ₐ(IIIb)_{b}(Sb)ₓ(Te)_{1-a-b-x} of the recording material in the radius direction be in a range of 0.02 to 0.06 (0.02 ≦ a ≦ 0.06) for a recording line speed of 3 to 4 m/sec.

For the disc-shaped recording medium, it is preferable that a in the composition of (Ib)ₐ(IIIb)_{b}(Sb)ₓ(Te)_{1-a-b-x} of the recording material in the radius direction be in a range of 0.01 to 0.05 (0.01 ≦ a ≦ 0.05) for a recording line speed of 4 to 6 m/sec.

For the disc-shaped recording medium, it is preferable that a in the composition of (Ib)ₐ(IIIb)_{b}(Sb)ₓ(Te)_{1-a-b-x} of the recording material in the radius direction be in a range of 0.005 to 0.04 (0.005 ≦ a ≦ 0.04) for a recording line speed of 6 to 8 m/sec.

The meta-stable phase recording material for the optical recording medium of the present invention may be composed of one meta-stable recording component in a single-phase meta-stable crystalline state, preferably a meta-stable solid solution in a single-phase crystalline state.

Furthermore, the meta-stable phase recording material for the optical recording medium of the present invention may comprise a plurality of meta-stable recording components in a mixed-phase crystalline state.

Furthermore, in the optical recording medium of the present invention, the recording layer may further comprise a stable phase recording material which belongs to Fm3m space group, provided that in this case it is required that the meta-stable phase recording material have a composition of (Ib)ₐ(IIIb)_{b}(Sb)ₓ(Te)_{1-a-b-x}, in which 0.72 ≦ x + 2a + 7b/6 ≦ 0.82, and also 4a + 2b <1, a > 0, and b > 0.

A more complete appreciation of the invention and many of the attendant advantages thereof will be readily obtained as the same becomes better understood by reference to the following detailed description when considered in connection with the accompanying drawings, wherein:
Figure is a schematic cross-sectional view of an example of a phase-change type optical recording medium of the present invention.

The optical recording medium of the present invention comprises a recording layer comprising a meta-stable phase recording material belonging to Fm3m space group with a composition of (Ib)ₐ(IIIb)_{b}(Sb)ₓ(Te)_{1-a-b-x}, in which 0.72 ≦ x + 2a + 7b/6 ≦ 0.82, preferably 0.75 ≦ x + 2a + 7b/6 ≦ 0.76, in order to maintain excellent repeated use recording characteristics over the entire range of the recording medium.

The meta-stable phase recording material may further comprise at least one additional element selected from the group consisting of elements which belong to Ib group, IIb group, IIIb group, IVa group, IVb group, Va group, VIa group, elements in Vb group other than Sb, elements in VIb group other than Te, and rare earth elements.

It is preferable that as the element for Ib group, Ag, Cu and/or Au, as the element for IIIb group, In, Ga, Ti and/or Al, as the element for Vb group other than Sb, As and/or Bi, and as the element for VIb group other than Te, S and/or Se be employed.

The optical characteristics of the recording layer of the optical recording medium of the present invention change in the course of the phase transition in the meta-stable phase recording material in the recording layer between at least one meta-stable crystalline phase and a meta-stable amorphous phase thereof.

In the optical recording medium of the present invention, the meta-stable phase belonging to Fm3m space group is considered to be formed substantially by Sb and Te in the recording material.

The meta-stable crystalline phase can be formed, for example, by Ib-IIIb-Vb-VIb solid solution, IIIb-Vb-VIb solid solution, Vb-VIb solution, and (Vb)₃(VIb) crystalline phase, in which Sb and Te are indispensable elements. Specific examples of the materials for forming the meta-stable crystalline phase are Ag-In-Sb-Te solid solution, Ag-In-Sb-Te solid solution, Ag-Sb-Te solid solution, In-Sb-Te solid solution, Sb-Te solid solution and Sb₃Te. The meta-stable crystalline phase in the above materials belongs to the Fm3m space group and has a lattice constant of 0.615 ± 0.02 nm.

It is preferable that the meta-stable phase in the crystallized portion of the recording layer be a single-phase meza-stable crystalline phase, which can be formed by, for example, a Ib-IIIb-Vb-VIb solid solution. Specific examples of the Ib-IIIb-Vb-VIb solid solution are Ag-In-Se-Te, Au-Al-Sb-Te, Au-Ag-In-Sb-Bi-Te-Se, (Au, Ag, Cu)-(In, Al, Ga, T1)-(Sb, Bi, As)-(Te, Se, S).

The recording layer may be composed of either one meta-stable recording component in a single-phase crystalline state or a plurality of meta-stable recording components in a mixed-phase crystalline state, which may be composed of any combination of the above materials in the meta-stable crystalline phase.

In any event, the crystalline structure thereof is based on a face-centered cubic (f.c.c.) lattice with a lattice constant of about 0.615 nm. For obtaining good mark shape, it is preferable that the crystallized portion of the recording layer be composed of only a single-phase meta stable Ib-IIIb-Vb-VIb solid solution.

In the present invention, the recording layer may have a gradient in the composition of the recording material thereof either in the direction of the surface (in-plane) thereof or in the direction of the depth thereof. The recording layer may also be composed of a plurality of overlaid recording film layers.

More specifically, in order to obtain a suitable crystallization rate of the recording layer for a predetermined recording line speed, there is provided an in-plane gradient in the composition of the recording material in the recording layer. For instance, the crystallization rate of the recording layer tends to be decreased as the content of the Ib group element and/or the VIb group element is increased in the composition of the recording material. On the other hand, as the content of the IIIb group element and/or the Vb group element is increased in the composition of the recording material, the crystallization rate of the recording layer tends to be increased. Furthermore, the crystallization rate of the recording layer is also dependent upon the atomic radius of the elements used. For instance, when In with a relatively large atomic radius is used, as the content of In is increased in the composition of the recording material, the crystallization rate of the recording layer increases.

In particular, in the optical recording medium with the recording layer comprising the recording material with the composition of (Ib)ₐ(IIIb)_{b}(Sb)ₓ(Te)_{1-a-b-x} in which the Ib group element in the recording material is Ag and/or Au, the crystallization rate of the recording layer is conspicuously dependent upon the content of Ag and/or Au, and the content of Ag and/or Au is decreased in a high speed recording area.

More specifically, in the case where the above optical recording medium is disc-shaped, when the content ratio of Ag and/or Au in the composition of the recording material is decreased in a radius direction from an inner side toward a peripheral side of the disc-shaped recording medium, the crystallization rate can be controlled so as to be balanced in CAV recording in which the recording line speed is smaller on the inner side than on the peripheral side of the disc. Even in this case, in order to maintain excellent repeated use recording characteristics over the entire range of the recording medium, the ranges of x, a and b in the composition of (Ib)ₐ(IIIb)_{b}(Sb)ₓ(Te)_{1-a-b-x} are determined so as to satisfy the formula of 0.72 ≦ x + 2a + 7b/6 ≦ 0.82, preferably the formula of 0.75 ≦ x + 2a + 7b/6 ≦ 0.76, as mentioned above.

The crystallization rate of the recording material with the above-mentioned composition in the recording layer is dependent upon the composition thereof. In the recording layer, when the content of the Ib group element or the content of the VIb element including Te is increased, the recording layer becomes advantageous for a low recording line speed, while when the content of the IIIb group element or the content of the Vb group element including Sb is increased, the recording layer becomes advantageous for a high recording line speed. There is a correspondence between the crystallization rate and the composition of the recording layer. In particular, the content of Ag or Au, and the content of Ag + Au have a significant effect on the crystallization rate. To be more specific, the greater the content of Ag or Au, or Ag + Au, the lower the crystallization rate.

For a disc-shaped recording medium such as CD-RW, using a strategy (a light emission pattern of a laser diode), in particular, with respect to the recording line speed and the composition of the recording layer, it is preferable that a in the composition of (Ib)ₐ(IIIb)_{b}(Sb)ₓ(Te)_{1-a-b-x} of the recording material, in which 0.72 ≦ x + 2a + 7b / 6 ≦ 0.82, and the Ib group element is Ag and/or Au, in the radius direction be in a range of 0.05 to 0.09 (0.05 ≦ a ≦ 0.09) for a recording line speed of 1 to 2 m/sec.

For the disc-shaped recording medium, it is preferable that a in the composition of (Ib)ₐ(IIIb)_{b}(Sb)ₓ(Te)_{1-a-b-x} of the recording material in the radius direction be in a range of 0.03 to 0.07 (0.03 ≦ a ≦ 0.07) for a recording line speed of 2 to 3 m/sec.

For the disc-shaped recording medium, it is preferable that a in the composition of (Ib)ₐ(IIIb)_{b}(Sb)ₓ(Te)_{1-a-b-x} of the recording material in the radius direction be in a range of 0.02 to 0.06 (0.02 ≦ a ≦ 0.06) for a recording line speed of 3 to 4 m/sec.

For the disc-shaped recording medium, it is preferable that a in the composition of (Ib)ₐ(IIIb)_{b}(Sb)ₓ(Te)_{1-a-b-x} of the recording material in the radius direction be in a range of 0.01 to 0.05 (0.01 ≦ a ≦ 0.05) for a recording line speed of 4 to 6 m/sec.

For the disc-shaped recording medium, it is preferable that a in the composition of (Ib)ₐ(IIIb)_{b}(Sb)ₓ(Te)_{1-a-b-x} of the recording material in the radius direction be in a range of 0.005 to 0.04 (0.005 ≦ a ≦ 0.04) for a recording line speed of 6 to 8 m/sec.

In the optical recording medium using the recording material with the above-mentioned composition of the present invention, even if the recording medium is unavoidably subjected to an initializing crystallization which applies such excessive thermal shock to the recording material that some materials are separated from the recording material and therefore the recording is made to be in a mixed phase state, the separated materials are in a crystalline phase belonging to Fm3m space group and in a lattice matching relationship with the recording material, and materials which are not in a lattice matching relationship with the crystalline phase belonging to Fm3m space group, such as Sb, Sb₂Te₃, InSb, an amorphous phase, are scarcely formed in the mixed phase state.

The materials which may be separated from the recording material for use in the present invention are a single element, a two-element or three-element compound, an alloy or a solid solution. Of these materials, Ib-Vb-VIb, IIIb-Vb-VIb, IIIb-VIb, Ib-IIIb-VIb, IIIb-Vb, Ib-IIIb-Vb-VIb solid solutions, Vb, for example, AgSbTe₂, In₃SbTe₂, AlSbTe₂, In₄Sb_{1.2}Te_{2.8}, InTe, which are in a stable state, meta-stable Ag-In-Te solid solution, meta-stable In-Sb-Te solid solution, meta-stable Ag-In-Sb-Te solid solution, meta-stable Sb₃Te solid solution, meta-stable Sb-Te solid solution, Sb₂Te₃, InSb, and Sb are apt to be separated.

Furthermore, of the above materials, the crystalline structures represented by general formulae stable IbVbVIb₂, stable IIIb₃VbVIb₂, stable IIIbVIb, meta-stable Vb₃VIb, meta-stable Vb-VIb solid solution, meta-stable Ib-Vb-VIb solid solution, meta-stable IIIb-Vb-VIb solid solution, and meta-stable Ib-IIIb-Vb-VIb solid solution, such as AgSbTe₂, In₃SbTe₂, AlSbTe₂, In₄Sb_{1.2}Te_{2.8} and InTe which are stable, meta-stable Ag-In-Te solid solution, meta-stable In-Sb-Te solid solution, meta-stable Ag-In-Sb-Te solid solution, meta-stable Sb₃Te solid solution, and meta-stable Sb-Te solid solution, belong to Fm3m space group and have a lattice constant of about 0.615 nm, so that these crystals are in a lattice matching relationship with the recording material of the recording medium of the present invention.

In the case where the crystallized portion of the recording layer is composed of only a single-phase meta-stable Ib - IIIb - Vb - VIb solid solution, there are no grain boundaries, or even if there are any crystalline grain boundaries, the crystalline grain boundaries constitute relatively good lattice junction, so that there are no large gaps in the grain boundaries, and therefore non-uniform heat conductivity is caused. In this case, there can be obtained a smooth boundary between an amorphous portion and a crystallized portion, which faithfully reflects an intensity distribution of a light beam and a time-profile thereof, so that excellent jitter values can be obtained in high recording density areas.

The recording material with the composition with the formula (Ib)ₐ(IIIb)_{b}(Sb)ₓ(Te)_{1-a-b-x} in which 0.72 ≦ x + 2a + 7b/6 ≦ 0.82, and 4a + 2b < 1, exhibits high stability to thermal shock at the time of the recording using the meta-stable crystalline phase thereof.

Even if a phase transition takes place in a meta-stable Ib-IIIb-Vb-VIb solid solution, and a mixed phase state is formed therein, which includes a plurality of crystalline phases including meta-stable phases and a stable crystalline phase, such as In₃SbTe₂, InTe, In₄Sb_{1.2}Te_{2.8}, and Al₃SbTe₂, the crystalline phases are in the above-mentioned lattice matching relationship, so that the recording material with the above composition can maintain relatively good recording characteristics.

In other words, the recording layer of the optical recording medium of the present invention may further comprise a stable phase recording material belonging to Fm3m space group, as long as the meta-stable phase recording material with the composition of (Ib)ₐ(IIIb)_{b}(Sb)ₓ(Te)_{1-a-b-x}, in which 0.72 ≦ x + 2a + 7b/6 ≦ 0.82, can also satisfy the conditions of 4a + 2b <1, a > 0, and b > 0.

There is a difference in crystallization rate between a plurality of crystalline phases, for instance, between a Ib-Vb-VIb stable crystalline phase and a Vb-VIb meta-stable crystalline phase, so that it is preferable that the meta-stable phase occupy the main portion of the recording material. In the abova-mentioned composition formula, a range which satisfies the conditions of 4a + 2b < 0.5, and a ≦ 0.09 is preferable. In particular, in an Ag-In-Sb-Te based recording material, excellent recording characteristics are difficult to obtain in a high recording density area when the composition thereof satisfies the condition of 4a + 2b = 1, in which the meta-stable phase is difficult to exist, because of a difference in crystallization rate, for instance, between In₃SbTe₂ and AgSbTe₂.

When the crystallized portion of the recording layer is composed of a plurality of crystalline phases which are not in the lattice matching relationship as in the prior art, and therefore the matching at the surfaces of the grain boundaries is not good, vacant holes are formed and/or segregation takes place, so that the thermal conductivity in the grain boundary area becomes non-uniform.

Furthermore, the crystallization rate generally differs in each grain, so that the boundary between the crystalline portion and the amorphous portion is apt to reflects the crystalline grain boundary and accordingly the boundary between the crystalline portion and the amorphous portion becomes non-uniform. As a result, excellent recording characteristics cannot be obtained in the high recording density area in the above-mentioned case. When the crystal grains are made fine so as to have a grain diameter in the order of several nm, the crystal grain boundary can be made smooth, but a problem with respect to the achievement of high recording density remains unsolved. Furthermore, at the boundary of grains which are not in the lattice matching relationship, distortion takes place and interface energy are increased at the boundary, so that disadvantageous phenomena such as the lowering of the crystallization rate and the corrosion of the grain boundary occur. Therefore, the process of making the crystalline grains fine is not suitable for the achievement of high recording density.

In contrast to this, in the present invention, even when the crystallized portion of the recording layer is composed of a plurality of crystalline phases, such as a plurality of meta-stable recording components, and a combination of a meta-stable recording components and a stable phase recording material, the crystalline phases belong to the same space group Fm3m, and the lattice constants thereof are so close that the conjunction of the grain boundary is as good as in a single-phase state. Therefore, even if there is a difference in the crystallization rate between the plurality of crystalline phases, the non-uniformity of the heat conductivity is relatively small and the recording characteristics equivalent to those in a single-phase state can be obtained in the above-mentioned case.

In the initializing crystallization of the phase-change type optical recording medium of the present invention, for instance, a laser beam initialization employed since it is suitable for the formation of the meta-stable phase. It is particularly preferable that the recording material for the present invention, with the composition of (Ib)ₐ(IIIb)_{b}(Sb)ₓ(Te)_{1-a-b-x}, have the structure of a single-phase meta-stable solid solution.

Other features of this invention will become apparent in the course of the following description of exemplary embodiments, which are given for illustration of the invention and are not intended to be limiting thereof.

Figure is a schematic cross-sectional view of an example of a phase-change type optical recording medium 1 of the present invention.

The phase-change type optical recording medium 1 is composed of a polycarbonate substrate 2 with guide grooves, and a first protective layer 3 composed of ZnS·SiO₂, having a thickness of 160 nm, an AgInSnTe recording layer 4 with a thickness of 20 nm, a second protective layer 5 composed of ZnS·SiO₂, having a thickness of 20 nm, a reflection and heat dissipation layer 6 composed of Al·Ti having a thickness of 100 nm, and an environmental protective layer 7 made of a UV curing resin with a thickness of 5 µm, which are successively overlaid on the polycarbonate substrate 2.

The optical recording medium 1, which is fabricated with the above-mentioned layered structure, is heated to a temperature of 30° to 80°C and then initialized, whereby an optical recording medium of the present invention can be obtained. The optical recording medium 1 is fabricated so as to be used in accordance with the CAV system in which the recording line speed differs in the radius direction of the recording medium 1.

The recording layer 4 is composed of the meta-stable phase recording material belonging to Fm3m space group with a composition of (Ib)ₐ(IIIb)_{b}(Sb)ₓ(Te)_{1-a-b-x}, in which 0.72 ≦ x + 2a + 7b/6 ≦ 0.82, and the changes in the optical characteristics thereof in the phase transition from the crystalline state to an amorphous state and vice versa are utilized. The crystalline structure of the meta-stable recording material for use in the present invention can be identified by a conventional method.

The recording medium 1 is disc-shaped, constituting a disc-shaped phase-change type optical recording medium, and the composition of the recording layer 4 is varied in the radius direction of the disc-shaped recording medium 1 in accordance with the changes in the recording line speed for the disc-shaped recording medium.

TABLE 1 shows the composition of the recording material and the crystalline structure thereof employed in each of recording media with Recording Layers No. 1 to No. 13 of the present invention and a comparative recording medium with Recording Layer No. 14, and the performance of each of the recording media. In investigating the performance of each of the recording media, the same recording strategy (the light emission pattern of the laser diode at the time of recording) as that used in CD-RW was used. The number of possible recording times was determined and evaluated based on a maximum number of repeated use recording times at which a jitter value σ/TW standardized with a window width TW thereof does not exceed 13%.

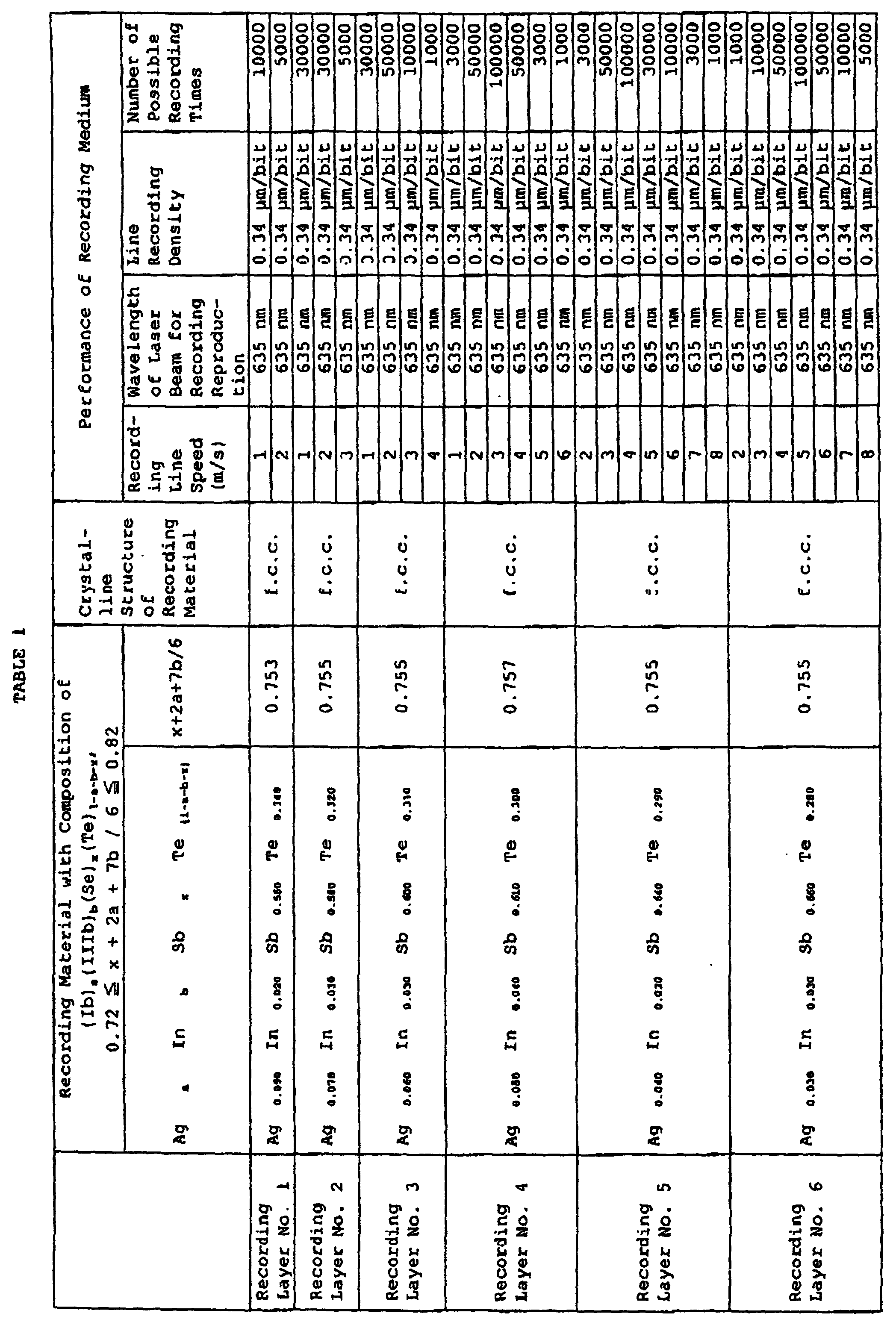

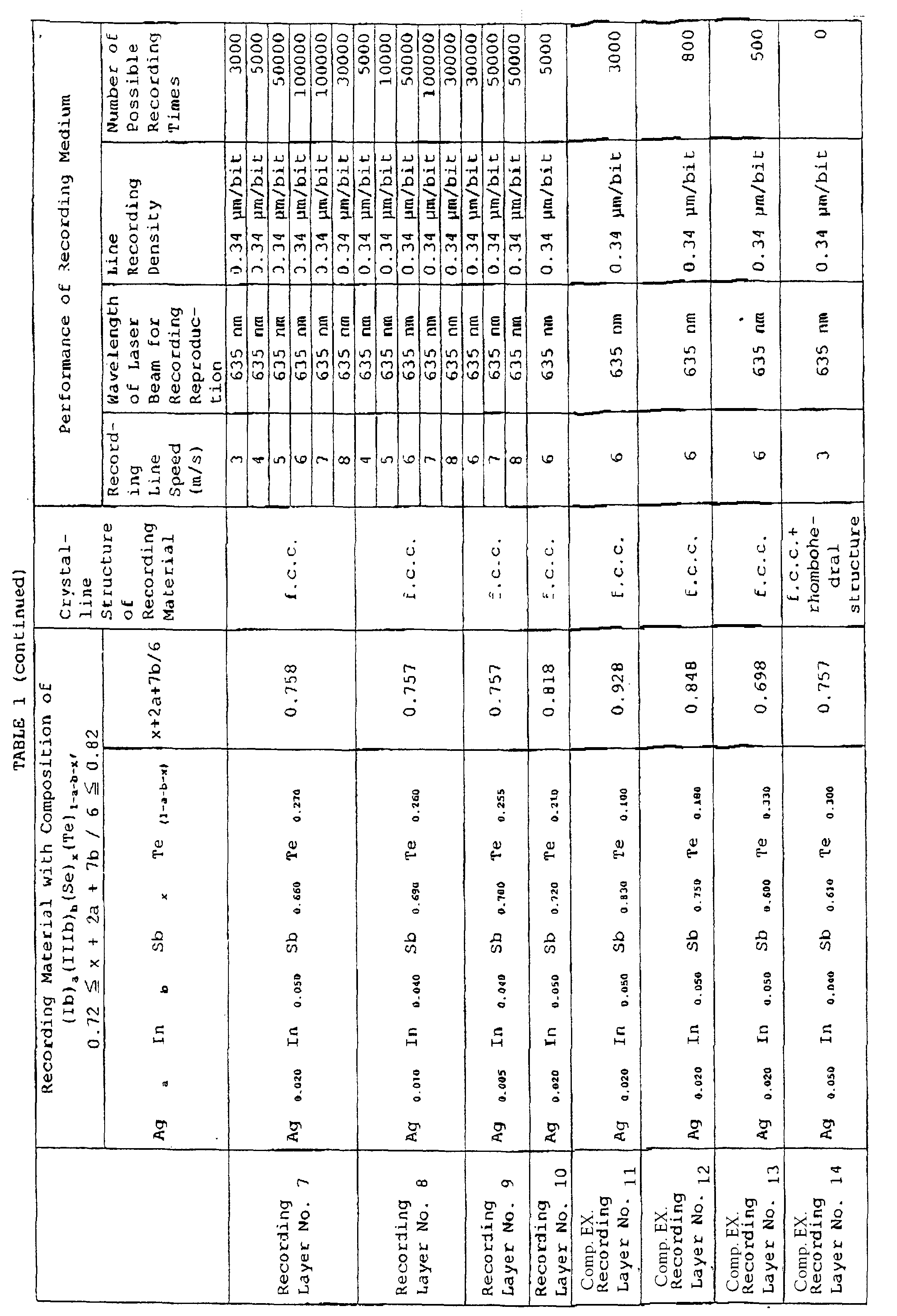

The results shown in TABLE 1 indicate that the recording line speed at which the number of possible recording times was confirmed to exceed 1000 times was 1 to 2 m/s when the content of Ag was 0.09 (a = 0.09) in Recording Layer No. 1, 1 to 3 m/s when the content of Ag was 0.07 (a = 0.07) in Recording Layer No. 2, 1 to 4 m/s when the content of Ag was 0.06 (a = 0.06) in Recording Layer No. 3, 1 to 6 m/s when the content of Ag was 0.05 (a = 0.05) in Recording Layer No. 4, 2 to 8 m/s when the content of Ag was 0.04 (a = 0.04) and 0.03 (a = 0.03) in Recording Layers No. 5, No. 6, and Nos. 10 to 14, 3 to 8 m/s when the content of Ag was 0.02 (a = 0.02) in Recording Layer No. 7, 4 to 8 m/s when the content of Ag was 0.01 (a = 0.01) in Recording Layer No. 8, and 6 to 8 m/s when the content of Ag was 0.005 (a = 0.005) in Recording Layer No. 9. In other words, for the line speed 1 to 2 m/s, 2 to 3 m/s, 3 to 4 m/s, 4 to 6 m/s, and 6 to 8 m/s, the range of the content (a) of Ag is respectively in the range of 0.05 ≦ a ≦ 0.09, 0.03 ≦ a ≦ 0.07, 0.02 ≦ a ≦ 0.06, 0.01 ≦ a ≦ 0.05, and 0.005 ≦ a ≦ 0.04. Part of Ag or the entirety thereof may be replaced by Au to obtain the same results as mentioned above.

The crystallization for the initialization of Recording Layers Nos. l to 13 was conducted by laser beam irradiation, and the crystallization for the initialization of Recording Layer No. 14 was conducted by lamp annealing. The results shown in TABLE 1 indicate that the repeated use characteristics of the recording materials with the composition of (Ib)ₐ(IIIb)_{b}(Sb)ₓ(Te)_{1-a-b-x} (AgₐIn_{b}SbₓTe_{1-a-b-x}) in which 0.72 ≦ x + 2a + 7b / 6 ≦ 0.82, are good. In order to secure excellent uniform repeated use recording characteristics, it is preferable that the value of x + 2a + 7b/6 be constant, more preferably that the value be uniform within a variation range of ± 0.02.

As shown in TABLE 1, the recording material used in Recording Layer No. 14 has a crystalline structure of f.c.c. + rhombohedral structure, which is entirely different from Fm3m, so that even though the composition of the recording material in Recording Layer No. 14 is within the range of the composition of the meta-stable phase recording material belonging to Fm3m space group for use in the present invention, the recording material in Recording Layer No. 14 cannot be used.

### Examples 1 to 4

A disk-shaped phase-change type optical recording media No. 1 to No. 4 with a layered structure as shown in Figure, with the composition of the recording material in the recording layer 4 varied in the radius direction thereof as shown in TABLE 2, were fabricated. In TABLE 2, for instance, "r = 23" indicates a position of 23 mm in the radius direction away from the center of each of the disk-shaped phase-change type optical recording media No. 1 to No. 4.

Using these optical recording media, the relationship among the repeated use recording number, the composition, and the crystalline structure after the initialization of the recording material used in each of the disk-shaped phase-change type optical recording media No. 1 to No. 4, was investigated. The results are shown in TABLE 2.

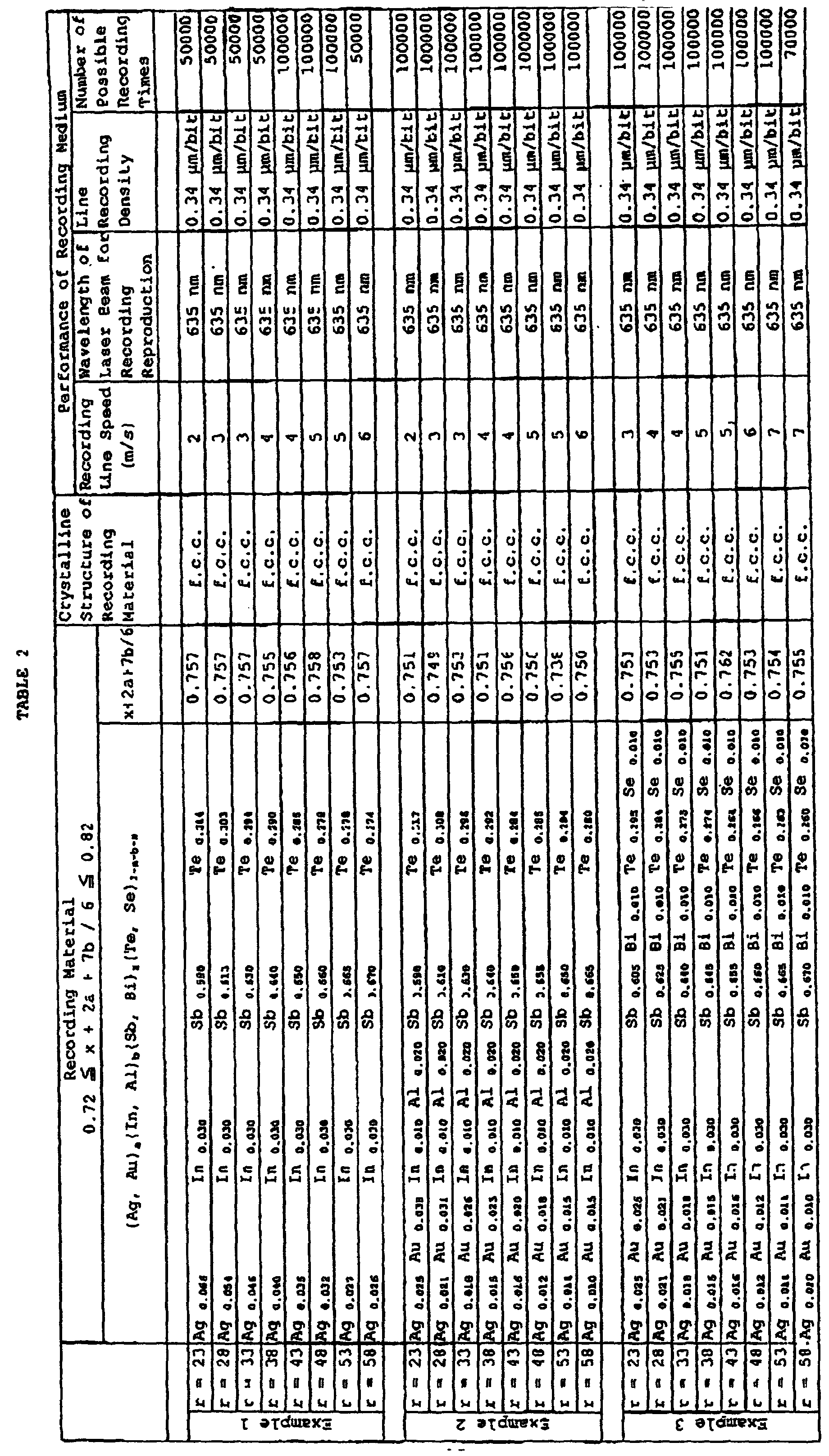

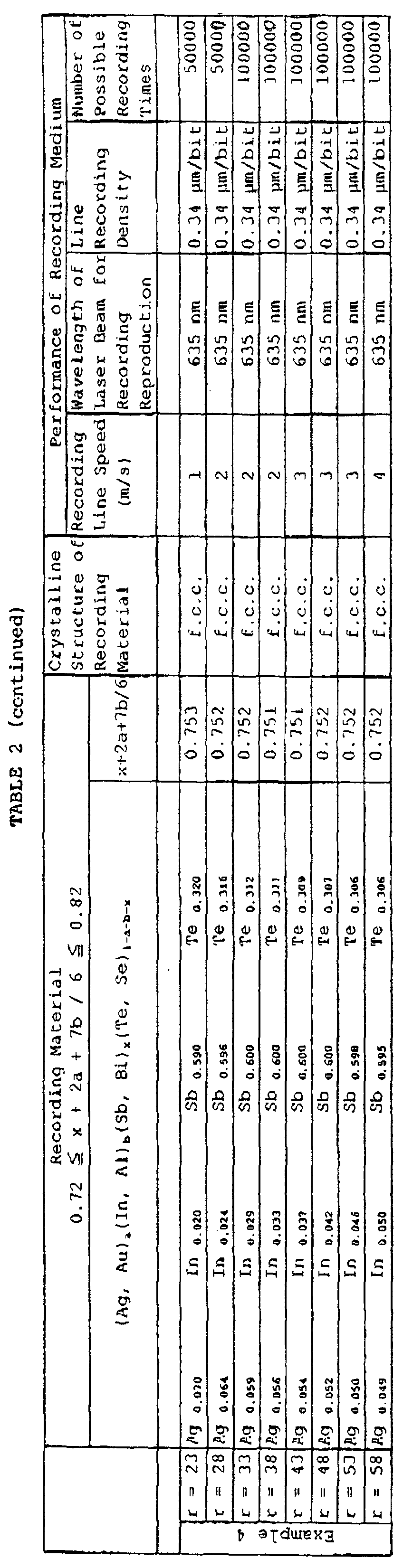

In Example l, the content of Ag (Ib group) was changed so as to depend upon the position in the radius direction of the recording medium No. 1, and accordingly the content of Sb (Vb group) and the content of Te (VIb group) were changed so as to obtain an optimum repeated use recording number. Thus, a high repeated use recording number was obtained on the entire surface of the recording medium No. l in CAV recording at 900 rpm.

In Example 2, part of Ag was replaced by Au in the recording material in the recording layer of the recording medium No. 2. The same results as in Example 1 were obtained with respect to the recording performance.

In Example 3, the contents of Ag and Au in the recording material were changed in the radius direction of the recording medium No. 3, and also Bi (Vb group) and Se (VIb group) were added to the recording material, and the recording medium No. 3 was subjected to CAV recording at l200 rpm. The result was that the repeated use recording performance was good on the entire surface thereof.

In Example 4, the contents of Ag (Ib group) and In (IIIb group) were changed so as to depend upon the position in the radius direction of the recording medium No. 1, and accordingly the content of Sb (Vb group) and the content of Te (VIb group) were also changed so as to obtain an optimum repeated use recording number. The result was that the greater the content of In, the better the repeated use recording performance at high recording line speed.

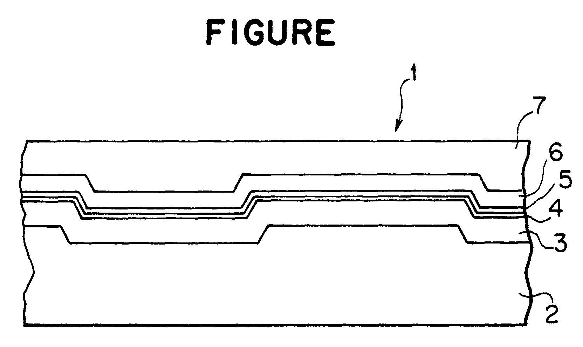

## Claims

1. An optical recording medium provided with a recording layer which comprises a meta-stable phase recording material belonging to Fm3m space group with a composition of (Ib)ₐ(IIIb)_{b}(Sb)ₓ(Te)_{1-a-b-x}, in which 0.72 ≦ x + 2a + 7b / 6 ≦ 0.82.

2. The optical recording medium as claimed in Claim 1, wherein said meta-stable phase recording material further comprises at least one element selected from the group consisting of elements which belong to Ib group, IIb group, IIIb group, IVa group, IVb group, Va group, VIa group, elements in Vb group other than Sb, elements in VIb group other than Te, and rare earth elements.

3. The optical recording medium as claimed in Claim 1 or Claim 2, wherein said meta-phase recording material has a composition of (Ib)ₐ(IIIb)_{b}(Sb)ₓ(Te)_{1-a-b-x} in which 0.75 ≦ x + 2a + 7b / 6 ≦ 0.76.

4. The optical recording medium as claimed in any one of Claims 1 to 3, wherein Ib in said composition of (Ib)ₐ(IIIb)_{b}(Sb)ₓ(Te)_{1-a-b-x} of said meta-stable phase recording material is an element selected from the group consisting of Ag and Au.

5. The optical recording medium as claimed in any one of Claims 1 to 4, wherein said recording medium is a disc-shaped recording medium, and the content ratio of said element in Ib group in said composition of said meta-stable phase recording material is decreased in a radius direction from an inner side toward a peripheral side of said disc-shaped recording medium.

6. The optical recording medium as claimed in Claim 5, wherein a in said composition of (Ib)ₐ(IIIb)_{b}(Sb)ₓ(Te)_{1-a-b-x} of said meta-stable phase recording material in said radius direction is in a range of 0.05 to 0.09; 0.05 ≦ a ≦ 0.09.

7. The optical recording medium as claimed in Claim 5, wherein a in said composition of (Ib)ₐ(IIIb)_{b}(Sb)ₓ(Te)_{1-a-b-x} of said meta-stable phase recording material in said radius direction is in a range of 0.03 to 0.07; 0.03 ≦ a ≦ 0.07.

8. The optical recording medium as claimed in Claim 5, wherein a in said composition of (Ib)ₐ(IIIb)_{b}(Sb)ₓ(Te)_{1-a-b-x} of said meta-stable phase recording material in said radius direction is in a range of 0.02 to 0.06; 0.02 ≦ a ≦ 0.06.

9. The optical recording medium as claimed in Claim 5, wherein a in said composition of (Ib)ₐ(IIIb)_{b}(Sb)ₓ(Te)_{1-a-b-x} of said meta-stable phase recording material in said radius direction is in a range of 0.01 to 0.05; 0.01 ≦ a ≦ 0.05.

10. The optical recording medium as claimed in Claim 6, wherein a in said composition of (Ib)ₐ(IIIb)_{b}(Sb)ₓ(Te)_{1-a-b-x} of said meta-stable phase recording material in said radius direction is in a range of 0.005 to 0.04; 0.005 ≦ a ≦ 0.04.

11. The optical recording medium as claimed in any one of Claims 1 to 10, wherein said meta-stable phase recording material comprises one meta-stable recording component which belongs to Fm3m space group in a single-phase crystalline state.

12. The optical recording medium as claimed in Claim 11, wherein said meta-stable recording component is a meta-stable solid solution in a single-phase crystalline state.

13. The optical recording medium as claimed in any one of Claims 1 to 10, wherein said meta-stable phase recording material comprises a plurality of meta-stable recording components which belongs to Fm3m space group in a mixed-phase crystalline state.

14. The optical recording medium as claimed in any one of Claims 1 to 13, wherein said recording layer further comprises a stable phase recording material belonging to Fm3m space group, provided that said meta-stable phase recording material has a composition of (Ib)ₐ(IIIb)_{b}(Sb)ₓ(Te)_{1-a-b-x}, in which 0.72 ≦ x + 2a + 7b / 6 ≦ 0.82, and also 4a + 2b <1, a > 0, and b > 0.

## Patentansprüche

1. Optisches Aufzeichnungsmedium, versehen mit einer Aufzeichnungsschicht, die ein Aufzeichnungsmaterial mit metastabiler Phase, das zu der Fm3m-Raumgruppe gehört, mit einer Zusammensetzung von (Ib)ₐ(IIIb)_{b}(Sb)ₓ(Te)_{1-a-b-x}, in welcher 0,72 ≤ x + 2a + 7b / 6 ≤ 0,82 gilt, umfasst.

2. Optisches Aufzeichnungsmedium nach Anspruch 1, wobei das Aufzeichnungsmaterial mit metastabiler Phase ferner mindestens ein Element umfasst, das aus der Gruppe bestehend aus Elementen, die zur Gruppe Ib, Gruppe IIb, Gruppe IIIb, Gruppe IVa, Gruppe IVb, Gruppe Va, Gruppe VIa, Elementen der Gruppe Vb anders als Sb, Elementen der Gruppe VIb anders als Te und Seltenerdelementen gehören, ausgewählt ist.

3. Optisches Aufzeichnungsmedium nach Anspruch 1 oder 2, wobei das Aufzeichnungsmaterial mit metastabiler Phase eine Zusammensetzung von (Ib)ₐ(IIIb)_{b}(Sb)ₓ(Te)_{1-a-b-x}, in welcher 0,75 ≤ x + 2a + 7b / 6 ≤ 0,76 gilt, aufweist.

4. Optisches Aufzeichnungsmedium nach irgendeinem der Ansprüche 1 bis 3, wobei Ib in der Zusammensetzung von (Ib)ₐ(IIIb)_{b}(Sb)ₓ(Te)_{1-a-b-x} des Aufzeichnungsmaterials mit metastabiler Phase ein Element ist, das aus der aus Ag und Au bestehenden Gruppe ausgewählt ist.

5. Optisches Aufzeichnungsmedium nach irgendeinem der Ansprüche 1 bis 4, wobei das Aufzeichnungsmedium ein scheibenförmiges Aufzeichnungsmedium ist, und das Anteilsverhältnis des Elementes in der Gruppe Ib in der Zusammensetzung des Aufzeichnungsmaterials mit metastabiler Phase in der Radiusrichtung von der Innenseite zu der Umfangsseite des scheibenförmigen Aufzeichnungsmediums abnimmt.

6. Optisches Aufzeichnungsmedium nach Anspruch 5, wobei a in der Zusammensetzung von (Ib)ₐ(IIIb)_{b}(Sb)ₓ(Te)_{1-a-b-x} des Aufzeichnungsmaterials mit metastabiler Phase in der Radiusrichtung in einem Bereich von 0,05 bis 0,09 liegt; also 0,05 ≤ a ≤ 0,09 gilt.

7. Optisches Aufzeichnungsmedium nach Anspruch 5, wobei a in der Zusammensetzung von (Ib)ₐ(IIIb)_{b}(Sb)ₓ(Te)_{1-a-b-x} des Aufzeichnungsmaterials mit metastabiler Phase in der Radiusrichtung in einem Bereich von 0,03 bis 0,07 liegt; also 0,03 ≤ a ≤ 0,07 gilt.

8. Optisches Aufzeichnungsmedium nach Anspruch 5, wobei a in der Zusammensetzung von (Ib)ₐ(IIIb)_{b}(Sb)ₓ(Te)_{1-a-b-x} des Aufzeichnungsmaterials mit metastabiler Phase in der Radiusrichtung in einem Bereich von 0,02 bis 0,06 liegt; also 0,02 ≤ a ≤ 0,06 gilt.

9. Optisches Aufzeichnungsmedium nach Anspruch 5, wobei a in der Zusammensetzung von (Ib)ₐ(IIIb)_{b}(Sb)ₓ(Te)_{1-a-b-x} des Aufzeichnungsmaterials mit metastabiler Phase in der Radiusrichtung in einem Bereich von 0,01 bis 0,05 liegt; also 0,01 ≤ a ≤ 0,05 gilt.

10. Optisches Aufzeichnungsmedium nach Anspruch 6, wobei a in der Zusammensetzung von (Ib)ₐ(IIIb)_{b}(Sb)ₓ(Te)_{1-a-b-x} des Aufzeichnungsmaterials mit metastabiler Phase in der Radiusrichtung in einem Bereich von 0,005 bis 0,04 liegt; also 0,005 ≤ a ≤ 0,04 gilt.

11. Optisches Aufzeichnungsmedium nach irgendeinem der Ansprüche 1 bis 10, wobei das Aufzeichnungsmaterial mit metastabiler Phase eine metastabile Aufzeichnungskomponente umfasst, die in einem einphasigen kristallinen Zustand zu der Raumgruppe Fm3m gehört.

12. Optisches Aufzeichnungsmedium nach Anspruch 11, wobei die metastabile Aufzeichnungskomponente eine metastabile feste Lösung in einem einphasigen kristallinen Zustand ist.

13. Optisches Aufzeichnungsmedium nach irgendeinem der Ansprüche 1 bis 10, wobei das Aufzeichnungsmaterial mit metastabiler Phase eine Vielzahl von metastabile Aufzeichnungskomponenten umfasst, die in einem gemischtphasigen kristallinen Zustand zu der Raumgruppe Fm3m gehören.

14. Optisches Aufzeichnungsmedium nach irgendeinem der Ansprüche 1 bis 13, wobei die Aufzeichnungsschicht ferner ein zu der Raumgruppe Fm3m gehörendes Aufzeichnungsmaterial mit stabiler Phase umfasst, mit der Maßgabe, dass das Aufzeichnungsmaterial mit metastabiler Phase eine Zusammensetzung von (Ib)ₐ(IIIb)_{b}(Sb)ₓ(Te)_{1-a-b-x} aufweist, in welcher 0,72 ≤ x + 2a + 7b / 6 ≤ 0,82 und auch 4a + 2b < 1, a > 0 und b >0 gilt.

## Revendications

1. Support d'enregistrement optique, pourvu d'une couche d'enregistrement qui comprend un matériau d'enregistrement à phase métastable, appartenant au groupe d'espace Fm3m et présentant une composition notée :
(Ib)ₐ(IIIb)_{b}(Sb)ₓ(Te)_{1-a-b-x} où 0,72 ≤ x + 2a + 7b/6 ≤ 0,82.

2. Support d'enregistrement optique, conforme à la revendication 1, dans lequel ledit matériau d'enregistrement à phase métastable comprend en outre au moins un élément choisi dans l'ensemble formé par les éléments des groupes Ib, IIb, IIIb, IVa, IVb, Va et VIa, les éléments du groupe Vb autres que l'antimoine Sb, les éléments du groupe VIb autres que le tellure Te, et les éléments du groupe des terres rares.

3. Support d'enregistrement optique, conforme à la revendication 1 ou 2, dans lequel ledit matériau d'enregistrement à phase métastable présente une composition notée :
(Ib)ₐ(IIIb)_{b}(Sb)ₓ(Te)_{1-a-b-x} où 0,75 ≤ x + 2a + 7b/6 ≤ 0,76.

4. Support d'enregistrement optique, conforme à l'une des revendications 1 à 3, dans lequel, dans ladite composition notée :
(Ib)ₐ(IIIb)_{b}(Sb)ₓ(Te)_{1-a-b-x}
du matériau d'enregistrement à phase métastable, Ib représente un élément choisi dans l'ensemble formé par l'or Au et l'argent Ag.

5. Support d'enregistrement optique, conforme à l'une des revendications 1 à 4, qui a la forme d'un disque et dans lequel la proportion dudit élément du groupe Ib dans la composition dudit matériau d'enregistrement à phase métastable diminue, suivant une direction radiale, du centre vers la périphérie dudit support d'enregistrement en forme de disque.

6. Support d'enregistrement optique, conforme à la revendication 5, dans lequel, dans ladite composition notée :
(Ib)ₐ(IIIb)_{b}(Sb)ₓ(Te)_{1-a-b-x}
du matériau d'enregistrement à phase métastable, a, dans ladite direction radiale, vaut de 0,05 à 0,09 (0,05 ≤ a ≤ 0,09).

7. Support d'enregistrement optique, conforme à la revendication 5, dans lequel, dans ladite composition notée :
(Ib)ₐ(IIIb)_{b}(Sb)ₓ(Te)_{1-a-b-x}
du matériau d'enregistrement à phase métastable, a, dans ladite direction radiale, vaut de 0,03 à 0,07 (0,03 ≤ a ≤ 0,07).

8. Support d'enregistrement optique, conforme à la revendication 5, dans lequel, dans ladite composition notée :
(Ib)ₐ(IIIb)_{b}(Sb)ₓ(Te)_{1-a-b-x}
du matériau d'enregistrement à phase métastable, a, dans ladite direction radiale, vaut de 0,02 à 0,06 (0,02 ≤ a ≤ 0,06).

9. Support d'enregistrement optique, conforme à la revendication 5, dans lequel, dans ladite composition notée :
(Ib)ₐ(IIIb)_{b}(sb)ₓ(Te)_{1-a-b-x}
du matériau d'enregistrement à phase métastable, a, dans ladite direction radiale, vaut de 0,01 à 0,05 (0,01 ≤ a ≤ 0,05).

10. Support d'enregistrement optique, conforme à la revendication 5, dans lequel, dans ladite composition notée :
(Ib)ₐ(IIIb)_{b}(Sb)ₓ(Te)_{1-a-b-x}
du matériau d'enregistrement à phase métastable, a, dans ladite direction radiale, vaut de 0,005 à 0,04 (0,005 ≤ a ≤ 0,04).

11. Support d'enregistrement optique, conforme à l'une des revendications 1 à 10, dans lequel ledit matériau d'enregistrement à phase métastable comprend un composant d'enregistrement métastable qui appartient au groupe d'espace Fm3m, dans un état cristallin à phase unique.

12. Support d'enregistrement optique, conforme à la revendication 12, dans lequel ledit composant d'enregistrement métastable est une solution solide métastable, dans un état cristallin à phase unique.

13. Support d'enregistrement optique, conforme à l'une des revendications 1 à 10, dans lequel ledit matériau d'enregistrement à phase métastable comprend plusieurs composants d'enregistrement métastables qui appartiennent au groupe d'espace Fm3m, dans un état cristallin à phase mixte.

14. Support d'enregistrement optique, conforme à l'une des revendications 1 à 13, dans lequel ladite couche d'enregistrement comprend en outre un matériau d'enregistrement à phase stable, appartenant au groupe d'espace Fm3m, sous réserve que ledit matériau d'enregistrement à phase métastable présente une composition notée :
(Ib)ₐ(IIIb)_{b}(Sb)ₓ(Te)_{1-a-b-x} où 0,72 ≤ x + 2a + 7b/6 ≤ 0,82,
et aussi, 4a + 2b < 1, a > 0 et b > 0.
